# EUROPEAN PATENT APPLICATION

(11) **EP 4 807 859 A1**
(43) Date of publication of application: **16.09.2026**
(21) Application number: 26157487.5
(22) Date of filing: 10.02.2026
(51) Int. Cl.: H01M 10/6554, H01M 10/6557, H01M 10/6567, H01M 10/659, H01M 50/209

(54) **MULTI-LAYER SHEETS WITH FLOW CHANNELS**

(30) Priority: 12.03.2025 US 202519077468
(71) Applicant: Freudenberg-NOK General Partnership, Plymouth, MI 48170-2455 (US)
(72) Inventor: Szparagowski, Raymond L., Loveland, 45140 (US); Kritzer, Peter, 67147 Forst (DE); Klee, Fabian, 64668 Rimbach (DE)
(74) Representative: Schaumburg und Partner Patentanwälte mbB

(57) **Abstract**

A cooling panel for a battery system includes a first sheet, a second sheet, and an additional sheet that overlaps to create a multi-layer sheet. The first sheet, the second sheet, and the additional sheet have hole patterns that partially overlap to create a flow channel through the multi-layer sheet. The fluid flows through the flow channel of the multi-layer sheet that is in contact with a battery module. The fluid absorbs heat from the battery module facilitating a safe operating environment for the battery modules. The first sheet, the second sheet, and the additional sheet are made of nonwoven material that is flexible and porous. The multi-layer sheet can be on one side of the battery cells or surround the battery cells of the battery module of the electric vehicle.

## Description

### FIELD

The present disclosure relates to multi-layer sheets with flow channels.

### BACKGROUND

This section provides background information related to the present disclosure which is not necessarily prior art.

The present disclosure provides an efficient, and effective way to reduce heat from battery cells for an electric vehicle or other device utilizing battery cells.

The intent of multi-layer sheets with flow channels is to provide and maintain a safe and optimal operating temperature for battery cells of an electric vehicle. The multi-layer sheets with flow channels facilitates the flow of a fluid that absorbs heat from the battery cells for prolonging the life of a battery cell through creating a safe and optimal environment for battery cell operations.

Previous heat exchanging devices or battery cooling plates that facilitate the flow of fluid that absorb heat from battery cells are heavy and rigid structures. The additional weight of a heat exchanger or battery cooling plate reduces the mileage range of an electric vehicle. The rigidity of a heat exchanger or battery cooling plate necessitates the additional man hours for the creation of tolerance stacking analyses, manufacturing, and assembly of electric vehicles. In addition, the added weight of rigid battery cooling plates and reduced mileage range of an electric vehicle creates environmental impact through constant need to recharge the vehicle. Accordingly, it is desirable to reduce weight, simplify structure, manufacturability, and assembly of heat exchanger and battery cooling devices.

### SUMMARY

This section provides a general summary of the disclosure, and is not a comprehensive disclosure of its full scope or all of its features.

According to an aspect of the present disclosure, a cooling panel for a battery system can include a first sheet with a first hole pattern, a second sheet with a second hole pattern different from or offset from the first hole pattern, and at least one additional sheet with a third hole pattern different from the second hole pattern, the first sheet, the second sheet, and the at least one additional sheet overlap to create a multi-layer sheet, the first hole pattern of the first sheet, second hole pattern of the second sheet, and third hole pattern of the at least one additional sheet partially overlap to create a flow channel.

According to a further aspect, the first sheet, the second sheet, and the at least one additional sheet have a thickness of 50 microns to 2000 microns. The thickness of the different sheets may vary.

According to a further aspect, the multi-layer sheet is directly connected to a battery system, to a battery module, to a single battery cell or an electronic device.

According to a further aspect, the multi-layer sheet has an outer container.

According to a further aspect, a fluid flows through the flow channel.

According to a further aspect, the first sheet, second sheet, and at least one additional sheet is made of nonwoven material, other fiber -based textiles, plastic, metal, rubber or open-porous foams.

According to a further aspect, the nonwoven material can possess an open porosity. The porosity can be both in the pane and through the plane to allow the coolant to come in contact with the heat source and with the cooling device or heat sink.

According to a further aspect, the first hole pattern of the first sheet, the second hole pattern of the second sheet, and the third hole pattern of the at least one additional sheet includes removed material from the thin sheet material.

According to a further aspect, the removed material from the nonwoven material can be laser cut, punched or otherwise cut.

According to an aspect of the present disclosure a cooling panel for a battery system includes a battery module with a plurality of battery cells, a first sheet with a first hole pattern, a second sheet with a second hole pattern different from or offset from the first hole pattern, and at least one additional sheet with a third hole pattern different from the second hole pattern, the first sheet, the second sheet, and the at least one additional sheet overlap one another to create a multi-layer sheet, the first hole pattern of the first sheet, second hole pattern of the second sheet, and third hole pattern of the at least one additional sheet partially overlap to create a flow channel through the multi-layer sheet, the multi-layer sheet is in contact with the battery module.

According to a further aspect, the first sheet, the second sheet, and the at least one additional sheet have a thickness of between 50 microns to 2000 microns.

According to a further aspect, the first sheet, second sheet, and at least one additional sheet is made of nonwoven material.

According to a further aspect, the nonwoven material can be porous.

According to a further aspect, at least one of the sheets can be electrically isolating in order to isolate the cells from each other. By using e.g., the central layer or the two outer layers in a 3-layered arrangement, an increased heat transfer between cell surfaces can be obtained.

According to a further aspect, the battery module has an outer container that encapsulates the plurality of battery cells.

According to a further aspect, a fluid flows through a fluid inlet of an outer container.

According to a further aspect, the fluid which flows through the inlet of the outer container flows through the flow channel of the multi-layer sheet.

According to a further aspect, the fluid which flows through the fluid inlet of the outer container and through the flow channel of the multi-layer sheet absorbs heat from the battery module and flows through a fluid outlet of the outer container.

According to an aspect of the present disclosure, a cooling panel for a battery system includes a fluid, a fluid pump, a battery module with a plurality of battery cells, a first sheet with a first hole pattern, and a second sheet with a second hole pattern, at least one additional sheet with a third hole pattern, the first sheet, second sheet, and at least one additional sheet overlap to create a multi-layer sheet, the first sheet, second sheet, and at least one additional sheet are made of porous nonwoven material, the first hole pattern of the first sheet, the second hole pattern of the second sheet, and the third hole pattern of the at least one additional sheet partially overlap to create a flow channel through the multi-layer sheet, the multi-layer sheet is disposed adjacent to a battery module, the fluid pump moves the fluid through the flow channel and porous nonwoven material of the multi-layer sheet.

According to a further aspect, the battery modules is contained within an outer container that has a fluid inlet and a fluid outlet.

According to a further aspect, the fluid pump moves the fluid through the fluid inlet of the outer container, through the flow channel of the multi-layer sheet, through the porous nonwoven material of the multi-layer sheet, around the battery module, and through the fluid outlet of the outer container.

The present disclosure has a lightweight, efficient, and multipurpose multi-layer sheet with which a safe and optimal environment for battery cells can be created. The present disclosure can have individual sheets with hole patterns that can be overlapped which helps space battery cells in a battery module and creates a flow channel for fluid to flow through the multi-layer sheet. When a fluid is moved through the multi-layer sheet in contact with a battery cell or battery module, the fluid absorbs the heat emanated from the battery cell or battery module.

The present disclosure of a multi-layer sheet has manufacturing, system optimization, and assembly benefits. The multi-layer sheet being made of individual sheets overlapped with each other allows for the manufacturing of the sheet to be simple and reproducible. The multi-layer sheet can be optimized for system requirements by creating more complex hole patterns of the individual sheets which increases surface area, heat absorption, and that determines pressure drop of the fluid across the system. These factors can be influenced by the complexity of the hole patterns which impacts the flow channel through the multi-layer sheet. The multi-layer sheet is flexible and can be configured to contact the battery module on one side or the multi-layer sheet can be configured to surround each of the battery cells of the multi-layer sheet increasing surface area and heat absorption. The multi-layer sheet is lightweight and flexible which decreases the need for tolerance stacking of the assembly of a vehicle compared to previous cooling panels which are rigid and heavy. By using thin single layers, the overall thickness of the arrangement can be kept to values below 0.5mm supporting space-saving battery designs.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.
FIG. 1 is a top plan view of the exemplary individual sheets that comprise the multi-layer sheet.
FIG. 1A is a top plan view of a multi-layer sheet illustrating the overlap of the individual sheets of FIG. 1 and partial overlap of the hole patterns of the individual sheets.
FIGS. 2, 2A and 2B are top plan views of the individual and separate sheets illustrating distinct hole patterns.
FIG. 2C is a top plan view of a stacked pair of exemplary sheets with an alternative hole pattern.
FIG. 3 is a schematic view of the multi-layer sheet in contact with a battery module.
FIG. 4 is a schematic view of an immersion cooling fluid system of a vehicle with multi-layer sheets surrounding the battery modules.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

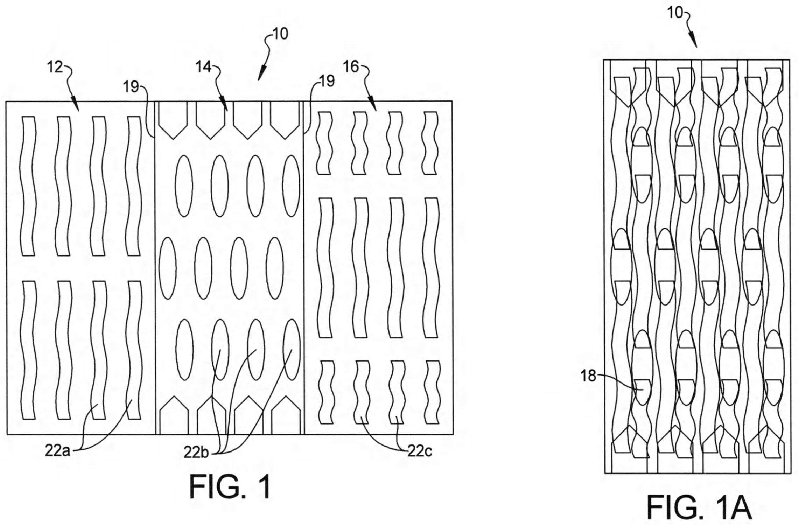

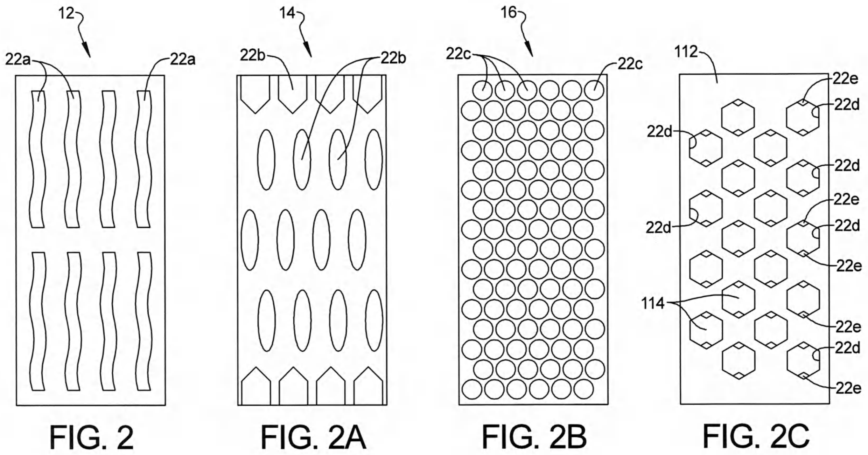

Referring to FIG. 1, a multi-layer sheet 10 according to the principles of the present disclosure is shown. The multi-layer sheet 10 can serve as a cooling panel for an electric vehicle which facilitates a safe and optimal environment for battery operations. The multi-layer sheet 10 may include a first sheet 12, a second sheet 14, an additional or third sheet 16, and a flow channel 18. The first sheet 12, second sheet 14, and the additional sheet 16 can be folded along fold lines 19 to overlap with each other, and each sheet includes a different hole pattern 22a, 22b, 22c, respectively that is different from other sheets or is the same as other sheets and offset in relation to the dimensions of the sheet. The hole patterns 22a, 22b, 22c partially overlap to create the flow channel 18. A fluid 20, which can be engine coolant/antifreeze, water or another fluid that absorbs heat, is moved or flows through the flow channel 18 created by the partial overlapping of the hole patterns 22a, 22b, 22c, 22d. Potential hole patterns of the sheets are shown in FIG. 2, 2A, 2B, and 2C. The hole patterns can be different shapes and combinations of shapes. The holes can be elongated, curved, zig zagged, oblong, circular, trapezoidal, hexagonal and other shapes that partially overlap with holes in other sheets.

FIG. 2C illustrates a pair of stacked sheets 112, 114 each with hexagonal holes 22d, 22e, respectively that are offset with one another and overlap at tip ends to provide a flow path that passes through overlapping holes 22d, 22e in a serpentine pattern as the coolant fluid flows along a length of the stacked sheets 112, 114.

The sheets of FIG. 2, 2A, 2B, and 2C are made of nonwoven material or another material that can maintain structure and allow for hole patterns to be created. The alternative materials can include, but are not limited to plastic sheets, carbon fiber mats, rubber sheets, foam sheets and metal sheets. Hole patterns can be laser cut or stamp cut into individual roles of sheets, and the sheets can be overlayed on top of each other. Creating the first sheet 12, the second sheet 14, and the additional sheet 16 from three separated sheets decreases manufacturing time and allows for complexity of hole patterns. The complexity of the flow channel 18 is directly related to the complexity of the hole patterns 22a-22d of each sheet. Desired pressure-drop and turbulence of the fluid 20 can be created by varying or making the hole patterns more complex which would make the flow channel 18 more complex through the multi-layer sheet 10. This allows for the system requirements and heat absorption of the fluid 20 to be configured for differing electric vehicle system needs. It is contemplated that the hole patterns can be removed from a singular sheet of material which can be folded along fold lines 19 to separate the single sheet into a multi-layer sheet with different panel thereof folded atop each other. Creating the hole patterns 22a-22d from a singular sheet reduces the potential for inconsistencies during overlapping of the hole patterns 22a-22d. It is also contemplated that the multi-layer sheet 10 can create multiple flow channels 18. The sheets preferably combine to have a thickness of between 50 to 2000 microns.

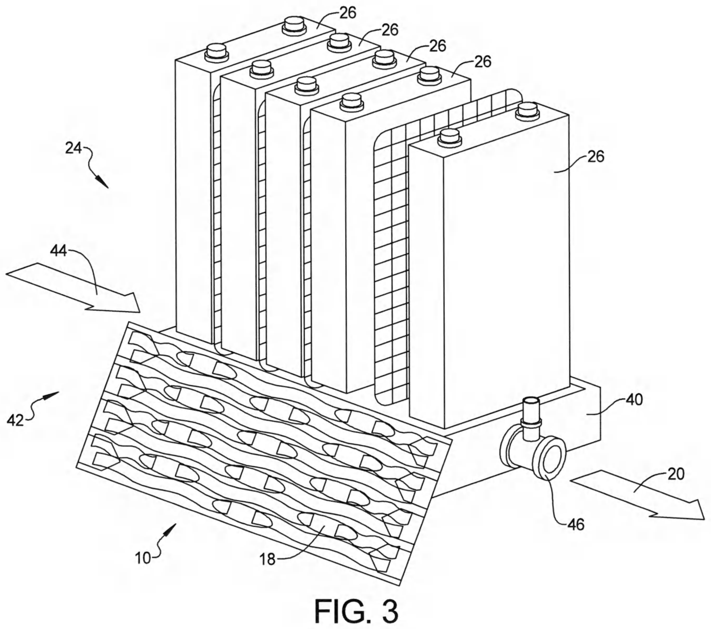

As shown in FIG. 3, a battery system 24 is shown including a housing 42 and a plurality of battery modules or cells 26 disposed with the housing 42. A cooling plate 40 supports the battery modules or cells 26 and a multi-layer sheet 10 is in contact with a battery modules or cells 26 and the cooling plate 40.The cooling plate 40 can include a fluid inlet 44 and a fluid outlet 46 to move a fluid 20 through the cooling plate 40. The multi-layer sheet 10 can be made from a heat conducting material such as graphite. The flow channels 18 can allow gaseous or liquid coolant flow through the multi-layer sheet 10 to dissipate heat therefrom. The multi-layer sheet 10 can conform to the bottom of the battery modules or cells 26 and provide improved heat transfer from the battery modules or cells to the cooling plate 40.The cooling plate can be placed below the prismatic cells or between the prismatic cells. It could also be placed between pouch cells or between round cells.

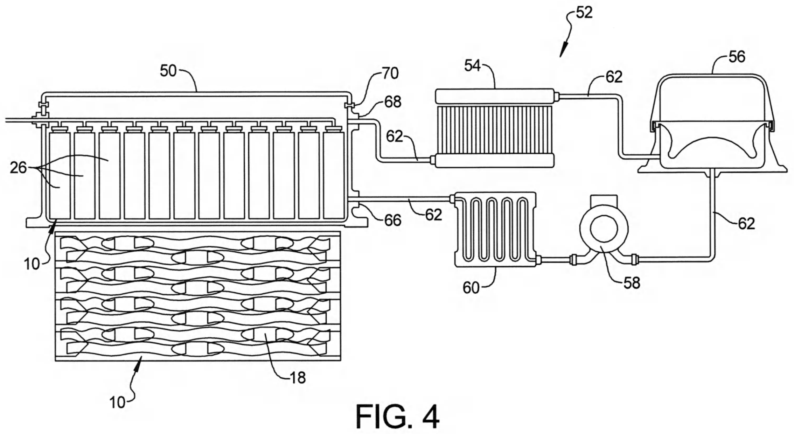

Referring to FIG. 4, a battery system includes a plurality of battery modules or cells 26 disposed in a battery housing 50 including a fluid system 52 which can include a cooling device 54, a fluid reservoir 56, a pump 58 and a temperature control unit 60. The multi-layer sheets 10 are disposed below and between the battery modules/cells 26. The fluid movement within the housing 50 is facilitated by a series of tubes and connectors 62 throughout the system which connects each fluid system 28 component. A cooling fluid 64 is moved by the fluid pump 58 from the battery housing 50, the cooling device 54 and reservoir 56 to the temperature control unit 60. The temperature control unit 60 regulates the temperature of the fluid 64 to be at an optimum temperature for battery module/cell 26 operation. The fluid 64 flows through the battery housing 50 fluid inlet 66 to the flow channels 18 of the multi-layer sheets 10. The cooling fluid 64 absorbs heat from the battery modules/cells 26 while flowing through the flow channel 18 of the multi-layer sheets 10 inside the battery housing 50. From the flow channels 18 of the multi-layer sheets 10, the fluid 20 moves through the fluid outlet 68 of the battery housing 50.

It is contemplated that the multi-layer sheet 10 can be configured to be below the battery modules/cells 26, as shown in FIG. 3, or configured to surround each battery module 26, as shown in FIG. 4, which increases surface area of the heat exchange of the fluid 64. In both configurations, sensors 70 throughout the fluid system 28 can determine and regulate the flow, temperature, detect conductivity of the fluid 64 inside the fluid system 52 to create a safe and optimal environment for the plurality of battery cells 26 operation.

The cooling panel of the present disclosure can be used with other electronic devices where cooling is needed to provide improved fluid circulation around the electronic device.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A cooling panel for an electronic system requiring cooling, comprising:
a first sheet with a first hole pattern; and
a second sheet with a second hole pattern different from or offset from the first hole pattern;
wherein the first sheet and the second sheet overlap to create a multi-layer sheet, the first hole pattern of the first sheet and the second hole pattern of the second sheet partially overlap to create a flow channel along a length of the multi-layer sheet.

2. The cooling panel of claim 1, further comprising at least one additional sheet with a third hole pattern different from the second hole pattern, the at least one additional sheet overlapping the first and second sheets.

3. The cooling panel of claim 1 or 2, wherein the first sheet, the second sheet, and the at least one additional sheet have a thickness of between 50 microns to 2000 microns.

4. The cooling panel of one of the preceding claims, wherein the multi-layer sheet is disposed in a battery system.

5. The cooling panel of one of the preceding claims, wherein a fluid flows through the flow channel.

6. The cooling panel of one of the preceding claims, wherein the first sheet and the second sheet are made of one of a plastic, carbon, graphite, metal, fiber-based textile, foam and a nonwoven material.

7. The cooling panel of claim 6, wherein the first hole pattern of the first sheet, the second hole pattern of the second sheet, and the third hole pattern of the at least one additional sheet are formed by removing material from the nonwoven material.

8. The cooling panel of one of the preceding claims, wherein the multi-layer sheet is placed inside of a cooler.

9. A battery system, comprising:
a battery module with a plurality of battery cells;
a first sheet with a first hole pattern;
a second sheet with a second hole pattern different from or offset from the first hole pattern;
wherein the first sheet and the second sheet overlap to create a multi-layer sheet, the first hole pattern of the first sheet and the second hole pattern of the second sheet partially overlap to create a flow channel through the multi-layer sheet, the multi-layer sheet is in contact with the battery module either directly or through a cooler.

10. The battery system of claim 9, wherein the first sheet and the second sheet have a thickness of 50 microns to 2000 microns.

11. The battery system of claim 9 or 10, wherein the first sheet and the second sheet are made of one of plastic, carbon, graphite, metal, a fiber-based textile, a foam and a nonwoven material.

12. The battery system of one of claims 9 to 11, wherein the battery system has a housing that encapsulates the plurality of battery cells.

13. The battery system of claim 12, wherein the housing has a fluid inlet and a fluid outlet.

14. The battery system of claim 13, wherein a fluid flows through the fluid inlet of the housing and through the flow channel of the multi-layer sheet and to the fluid outlet.

15. The battery system of one of claims 9 to 14, further comprising at least one additional sheet with a third hole pattern different from the second hole pattern, the at least one additional sheet overlapping the first and second sheets.
